# FASCICULE DE BREVET EUROPEEN

(11) **EP 3 433 991 B1**
(45) Date de publication et mention de la délivrance du brevet: **05.05.2021**
(21) Numéro de dépôt: 17710752.1
(22) Date de dépôt: 16.03.2017
(51) Int. Cl.: H04L 29/06, H04L 29/08, B64F 5/60, G07C 5/00

(54) **PROCÉDÉ DE GESTION ET DE MAINTENANCE D'UN AÉRONEF COMPORTANT UNE ZONE DE HAUT DEGRÉ DE SÉCURITÉ**
VERFAHREN ZUR VERWALTUNG UND WARTUNG EINES FLUGZEUG MIT EINEM BEREICH MIT HOHEM SICHERHEITSGRAD
METHOD FOR MANAGING AND MAINTAINING AN AIRCRAFT COMPRISING AN AREA WITH A HIGH DEGREE OF SECURITY

(30) Priorité: 25.03.2016 FR 1652600
(43) Date de publication de la demande: 30.01.2019
(73) Titulaire: SAFRAN ELECTRONICS & DEFENSE, 92100 Boulogne Billancourt (FR)
(72) Inventeur: VERRAES, Cédric, 92100 Boulogne Billancourt (FR); COUTURIER, Emmanuel, 92100 Boulogne Billancourt (FR); ROBIN, Lionel, 92100 Boulogne Billancourt (FR); MONOT, Thomas, 92100 Boulogne Billancourt (FR)
(74) Mandataire: Cabinet Le Guen Maillet
(86) Numéro de dépôt international: PCT/EP2017/056311
(87) Numéro de publication internationale: WO 2017/162526

(56) Documents cités:
- WO-A1-2012/126674
- FR-A1- 2 952 258
- US-A1- 2009 192 659

## Description

La présente invention concerne le domaine de la gestion et la maintenance d'aéronefs.

La maintenance d'un aéronef nécessite parfois, pour une même opération de maintenance, la présence de personnel de maintenance dans le cockpit de l'aéronef ainsi que près de la partie de l'aéronef pour laquelle l'opération de maintenance doit être effectuée.

Par exemple, lorsque des interventions de maintenance doivent être effectuées sur un train avant d'atterrissage d'un aéronef, au moins deux personnes sont nécessaires. Une première personne est placée dans le cockpit de l'aéronef et a accès à une documentation permettant la maintenance du train avant d'atterrissage ainsi qu'aux différents écrans et/ou commandes du cockpit.

Ces écrans et/ou commandes sont par la suite appelés interface homme machine du cockpit.

La documentation est sous forme papier ou mémorisée dans un système informatique de l'aéronef.

Au moins une seconde personne effectue physiquement la maintenance sur le train d'atterrissage avant en fonction des instructions fournies par la personne placée dans le cockpit de l'aéronef.

Ces instructions sont classiquement fournies oralement et sont potentiellement perturbées par le bruit ambiant.

Bien souvent, les documentations ne sont pas à jour, ce qui pénalise la maintenance de l'aéronef.

De plus, la maintenance d'un aéronef est susceptible d'être assurée par différentes personnes de différentes sociétés dans le monde.

Un agent de maintenance suit une procédure établie de maintenance pour arriver à déterminer quel remplacement de pièce ou réglage doit être effectué. Il arrive ainsi qu'une même pièce soit remplacée plusieurs fois en suivant la procédure établie alors que celle-ci n'est pas l'origine de la défaillance mais plutôt une conséquence de celle-ci.

Enfin, selon le lieu où la maintenance est effectuée, il est parfois difficile de faire intervenir un expert reconnu pour la résolution d'une défaillance.

La demande de brevet WO 2012/126674 est du domaine de l'accès à un réseau de haute sécurité pour des opérations de gestion et de maintenance dans lequel un dispositif de connexion permet de connecter un dispositif de maintenance quelconque à un réseau à haute sécurité, sans compromettre la confiance du système.

La demande de brevet FR 2952 258 divulgue l'obtention d'informations d'un serveur.

La présente invention vise à réduire le nombre de personnes impliquées dans certaines tâches de maintenance, à garantir que la documentation nécessaire à une opération de maintenance soit à jour et à permettre une éventuelle intervention d'un expert pour une intervention de maintenance.

A cette fin, selon un premier aspect, l'invention propose un procédé de gestion et de maintenance d'un aéronef comportant une zone de haut degré de sécurité, une interface homme machine de l'aéronef étant comprise dans la zone de haut degré de sécurité et nécessaire à une opération de maintenance à effectuer par un opérateur de maintenance sur un dispositif de l'aéronef à maintenir placé hors de la zone de haut degré de sécurité, le procédé comportant les étapes de :
- connexion d'un premier dispositif à la zone de haute sécurité pour accéder à l'interface homme machine de l'aéronef,
- connexion d'un second dispositif à un troisième dispositif apte à afficher l'interface homme machine de l'aéronef et par lequel l'opérateur de maintenance peut interagir avec l'interface homme machine de l'aéronef,
- authentification de l'opérateur de maintenance auprès du second dispositif,
- création d'une liaison de communication sécurisée entre le premier et second dispositifs, la liaison sécurisée étant créée dans un réseau de communication,
- réception par le second dispositif de l'interface homme machine de l'aéronef du premier dispositif et transfert d'informations pour l'affichage de l'interface homme machine de l'aéronef sur le troisième dispositif,
- connexion du second dispositif à un serveur par l'intermédiaire du réseau de télécommunication pour obtenir des informations du serveur à destination du troisième dispositif par l'intermédiaire du second dispositif, la connexion du second dispositif au serveur n'étant pas effectuée par l'intermédiaire de la liaison sécurisée créée.

L'invention concerne aussi un système de gestion et de maintenance d'un aéronef comportant une zone de haut degré de sécurité, une interface homme machine de l'aéronef étant comprise dans la zone de haut degré de sécurité et nécessaire à une opération de maintenance à effectuer par un opérateur de maintenance sur un dispositif de l'aéronef à maintenir placé hors de la zone de haut degré de sécurité, le système comportant :
- des moyens de connexion d'un premier dispositif à la zone de haute sécurité pour accéder à l'interface homme machine de l'aéronef,
- des moyens de connexion d'un second dispositif à un troisième dispositif apte à afficher l'interface homme machine de l'aéronef et par lequel l'opérateur de maintenance peut interagir avec l'interface homme machine de l'aéronef,
- des moyens d'authentification de l'opérateur de maintenance auprès du second dispositif,
- des moyens de création d'une liaison de communication sécurisée entre le premier et second dispositifs, la liaison sécurisée étant créée dans un réseau de communication,
- des moyens de réception par le second dispositif de l'interface homme machine de l'aéronef du premier dispositif et transfert d'informations pour l'affichage de l'interface homme machine de l'aéronef sur le troisième dispositif,
- des moyens de connexion du second dispositif à un serveur par l'intermédiaire du réseau de télécommunication pour obtenir des informations du serveur à destination du troisième dispositif par l'intermédiaire du second dispositif, la connexion du second dispositif au serveur n'étant pas effectuée par l'intermédiaire de la liaison sécurisée créée.

Ainsi, la présente invention permet de réduire le nombre de personnes impliquées dans certaines tâches de maintenance, de garantir que la documentation nécessaire à une opération de maintenance soit à jour et permet une éventuelle intervention d'un expert pour une intervention de maintenance.

Selon un mode particulier de l'invention, les informations obtenues du serveur sont la documentation de l'aéronef.

Ainsi, l'opérateur de maintenance dispose de toute la documentation nécessaire à l'opération de maintenance.

Selon un mode particulier de l'invention, les informations obtenues sont une mise en relation d'un expert avec l'opérateur de maintenance.

Ainsi, l'opérateur de maintenance dispose de l'assistance d'un expert pour effectuer l'opération de maintenance.

Selon un mode particulier de l'invention, le second dispositif transfère les informations pour l'affichage de l'interface homme machine de l'aéronef au serveur à destination de l'expert.

Ainsi, l'expert dispose de toutes les informations nécessaires à l'assistance de l'opérateur de maintenance.

Selon un mode particulier de l'invention, le procédé comporte en outre les étapes de :
- création d'une liaison de communication sécurisée entre le premier dispositif et le serveur, la liaison sécurisée étant créée dans le réseau de communication,
- réception par le serveur de l'interface homme machine de l'aéronef du premier dispositif pour l'affichage de l'interface homme machine de l'aéronef au serveur à destination de l'expert.

Ainsi, l'expert dispose de toutes les informations nécessaires à l'assistance de l'opérateur de maintenance.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 représente un système dans lequel la présente invention est implémentée ;
la Fig. 2 représente un exemple d'architecture d'un dispositif mobile sol selon la présente invention ;
la Fig. 3 représente un exemple d'architecture d'un serveur selon la présente invention ;
la Fig. 4 représente des étapes d'un algorithme en partie exécutées par un dispositif mobile sol.

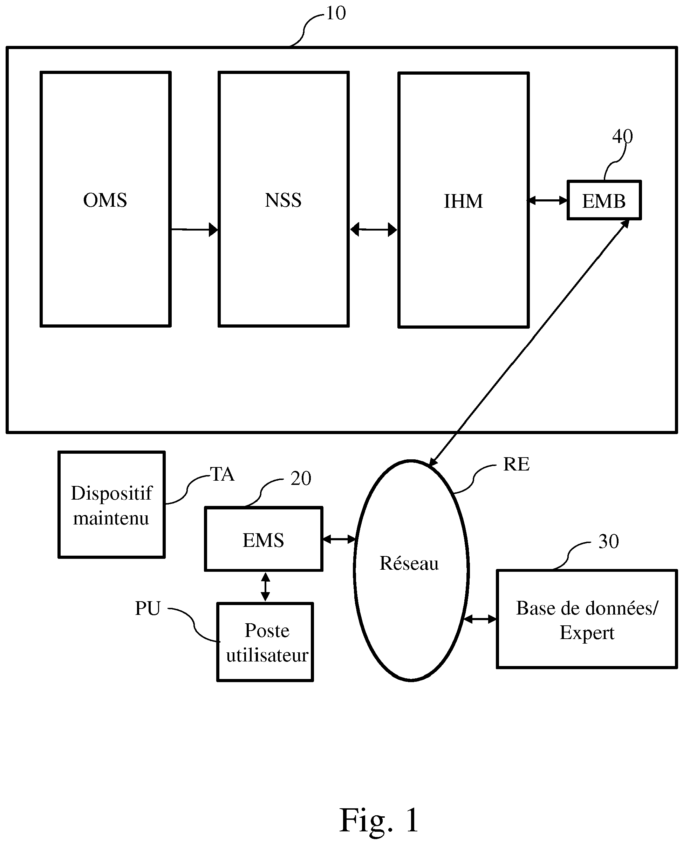

La **Fig. 1** représente un système dans lequel la présente invention est implémentée.

Dans le domaine de l'aéronautique, des zones sensibles telles que le cockpit OMS d'un aéronef 10, sont gérées par un système d'information nécessitant un haut degré de sécurité et donc un contrôle d'accès de haute sécurité.

Les systèmes d'information qui gèrent de telles zones partagent des besoins et des exigences de fiabilité et de sécurité hautes. Les besoins de sécurité se caractérisent selon plusieurs axes, intégrité, confidentialité, disponibilité, fiabilité, anti intrusion, traçabilité des interventions entre autres. Ces systèmes obéissent à un cahier des charges strict visant à assurer ce niveau de sécurité.

En particulier, on dit d'un système, d'un appareil voire d'un utilisateur qu'il est de confiance (*trusted* en anglais) s'il ne présente pas une menace de sécurité sur les besoins de sécurité d'un autre système notamment ceux ayant des besoins de fiabilité élevés pour la sécurité du vol. Au contraire, un système ou un appareil pouvant agir de manière malveillante en impactant des besoins de sécurité d'un autre système est identifié comme pas de confiance (*non trusted* en anglais).

Les systèmes d'information de haute sécurité, dits de confiance, doivent donc être protégés d'attaques malveillantes provenant d'autres systèmes qui ne sont pas de confiance. Lors de leur fonctionnement normal, ces systèmes sont typiquement isolés, leur niveau de sécurité peut donc être garanti car non accessible par des éléments non de confiance.

Toutefois, ces systèmes doivent subir des interventions de maintenance. Ces interventions de maintenance comprennent la gestion du système, le changement de paramètres, les mises à jour, les adaptations, les réglages. Elles comprennent également la récupération des données opérationnelles (*log data* en anglais). Elles comprennent enfin la mise à jour de modules logiciels pour permettre l'évolution du système. Ces interventions de maintenance nécessitent la connexion d'un système extérieur au système de haute sécurité OMS. Ce système extérieur doit alors être lui-même de confiance, c'est-à-dire être géré selon un cahier des charges précis et cohérent avec le système de haute sécurité pour garantir la confiance de l'opération de maintenance.

Selon la présente invention, un premier dispositif, dit dispositif mobile bord EMB 40, est connecté à la zone sensible OMS via un serveur de réseau NSS et a accès à l'interface homme machine IHM de l'aéronef.

Un second dispositif, dit dispositif mobile sol EMS 20, est en communication avec le dispositif mobile bord EMB 40 par l'intermédiaire d'un réseau RE.

Le dispositif mobile sol EMS est connecté à un troisième dispositif, dit poste utilisateur PU.

Le périmètre de confiance intègre l'OMS, l'aéronef 10, le dispositif mobile bord EMB 40 et le dispositif mobile sol 20. Le périmètre de confiance n'intègre pas le poste utilisateur PU.

Tout type de poste utilisateur PU peut être utilisé pour des opérations de maintenance sans nécessiter de gestion particulière, celui-ci ne faisant pas partie du périmètre de confiance. Le poste utilisateur PU est par exemple une tablette tactile, un téléphone intelligent (smartphone en anglais), voire un ordinateur portable.

La connexion entre le dispositif mobile bord EMB 40 et le serveur de réseau NSS peut être faite par une connexion filaire telle qu'une connexion Ethernet ou encore une connexion sans fil telle qu'une connexion WiFi ou autre.

Généralement un pare-feu (*firewall* en anglais) permettant de limiter les flux de données entrant dans la zone sensible OMS limite les flux de données sortant aux flux strictement nécessaires et prévus pour la maintenance du système. Le dispositif mobile bord EMB 40 est typiquement un ordinateur portable que l'on vient connecter au réseau du système sécurisé. Lorsque le dispositif mobile bord EMB n'est pas relié au serveur de réseau NSS par un lien filaire direct, par exemple lorsqu'il s'agit d'un lien sans fil ou d'un lien au travers d'un réseau, la connexion entre le dispositif mobile bord EMB et le serveur de réseau NSS est sécurisée à l'aide d'un tunnel chiffré.

Le réseau RE est par exemple un réseau sans fil tel qu'un réseau WIFI. La connexion entre le dispositif mobile bord EMB et le dispositif mobile sol EMS 20 est sécurisée à l'aide d'un tunnel chiffré.

Le lien entre le dispositif mobile sol EMS 20 et le poste utilisateur PU peut reposer sur toute technologie comme par exemple un lien série de type USB (*Universal Serial Bus* en anglais), ou une liaison filaire telle que Ethernet ou une technologie sans fil comme Bluetooth.

Le dispositif mobile sol EMS 20 dispose également de moyens d'authentifier l'utilisateur, par exemple un lecteur d'empreintes digitales. L'établissement du tunnel avec le dispositif mobile bord EMB 40 peut être soumis à la validation de l'authentification. Le dispositif mobile sol EMS 20 dispose également de crédits d'authentification, par exemple sous la forme de certificats numériques, permettant l'établissement dudit tunnel.

Le réseau RE permet aussi au dispositif mobile sol EMS 20 de communiquer avec un serveur distant 30 hébergeant une base de données et permettant d'obtenir une assistance d'un expert.

Le serveur 30 est par exemple un serveur de la compagnie aérienne disposant de l'aéronef 10, ou un serveur d'une compagnie de maintenance d'aéronefs. Le serveur 30 peut être relié au réseau RE par une combinaison de plusieurs réseaux de communication, celui-ci étant bien souvent physiquement très éloigné du réseau RE.

Lorsqu'une opération de maintenance doit être effectuée par un opérateur de maintenance sur un dispositif TA, par exemple un train d'atterrissage avant, de l'aéronef 10, l'opérateur de maintenance connecte le dispositif mobile bord EMB 40 au serveur de réseau NSS. Le dispositif mobile bord EMB 40 est par exemple stocké dans l'aéronef 10 ou est apporté par l'opérateur de maintenance.

L'opérateur de maintenance se rend à proximité du dispositif à maintenir TA pour effectuer une maintenance de celui-ci.

L'opérateur de maintenance connecte le dispositif mobile sol EMS 20 au poste utilisateur et s'authentifie auprès du dispositif mobile sol EMS 20.

Un tunnel est alors créé entre le dispositif mobile sol EMS 20 et le dispositif mobile bord EMB 40.

L'interface homme machine IHM de l'aéronef 10 est alors déportée sur le poste utilisateur PU via le tunnel ainsi créé et le dispositif mobile sol EMS 20.

L'interface homme machine IHM de l'aéronef 10 permet l'affichage d'un menu de maintenance permettant de choisir un type d'opération de maintenance qui comprend par exemple des opérations de paramétrage, la récupération de données opérationnelles et la mise à jour de modules logiciels au sein du système.

De plus, selon la présente invention, l'opérateur de maintenance peut accéder au serveur 30 par l'intermédiaire du dispositif mobile sol EMS 20 afin d'obtenir une documentation technique relative à la maintenance du dispositif TA. De même, l'opérateur de maintenance peut accéder au serveur 30 par l'intermédiaire du dispositif mobile sol EMS 20 afin d'obtenir une assistance technique d'un expert. L'accès à la documentation technique ou à l'assistance d'un expert doit se faire dans certains cas via un tunnel chiffré de manière à garantir la confidentialité des échanges, par exemple lors de l'accès à des éléments de paramétrage confidentiels du TA.

L'expert est une personne physique ou un système logiciel d'aide au diagnostic plus complet que la documentation technique relative à la maintenance du dispositif TA disponible soit sur le serveur de réseau NSS, soit sur le poste utilisateur PU.

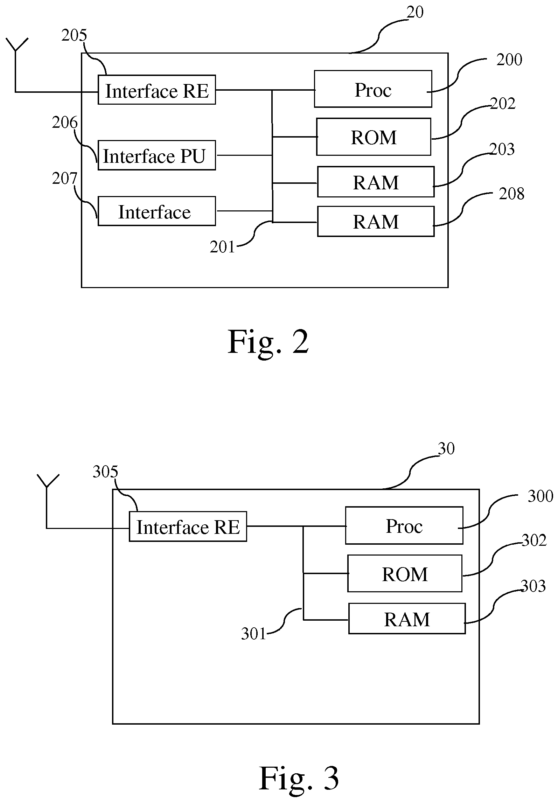

La **Fig. 2** représente un exemple d'architecture d'un dispositif mobile sol selon la présente invention.

Le dispositif mobile sol EMS 20 comprend :
- un processeur, micro-processeur, ou microcontrôleur 200 ;
- une mémoire volatile 203 ;
- une mémoire non volatile 202;
- une interface réseau 205 ;
- une interface d'authentification 206 ;
- une interface de communication 207 avec un poste utilisateur PU ;
- un composant 208, type carte à puce par exemple, permettant de de stocker des données ayant des besoins de confidentialité élevés telles que par exemple les éléments permettant l'authentification ;
- un bus de communication reliant le processeur 200 à la mémoire ROM 203, à la mémoire RAM 203, au composant 208 et aux interfaces 205, 206 et 207.

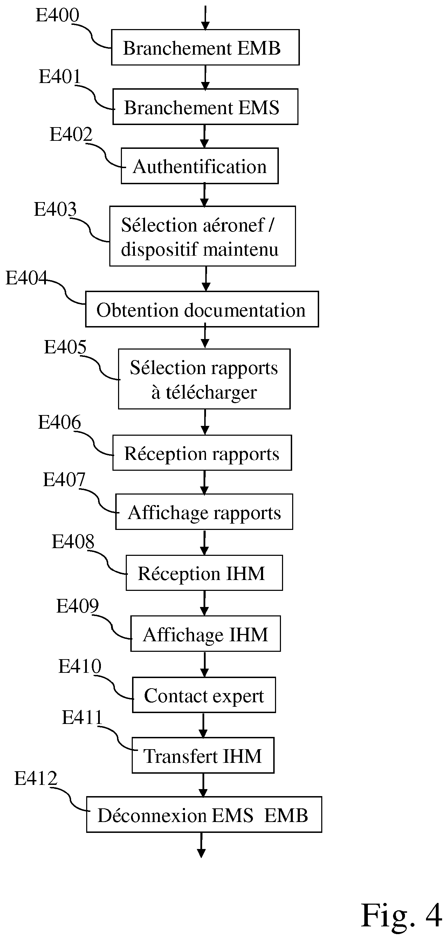

Le processeur 200 est capable d'exécuter des instructions chargées dans la mémoire volatile 203 à partir de la mémoire non volatile 202. Lorsque le dispositif mobile sol EMS 20 est mis sous tension, le processeur 200 est capable de lire de la mémoire volatile 203 des instructions et de les exécuter. Ces instructions forment un programme d'ordinateur qui cause la mise en œuvre, par le processeur 200, de tout ou partie du procédé décrit en relation avec la Fig. 4.

Tout ou partie du procédé décrit en relation avec la Fig. 4 peut être implémenté sous forme logicielle par exécution d'un ensemble d'instructions par une machine programmable, telle qu'un DSP (*Digital Signal Processor* en anglais ou *Unité de Traitement de Signal Numérique* en français) ou un microcontrôleur ou être implémenté sous forme matérielle par une machine ou un composant dédié, tel qu'un FPGA (*Field-Programmable Gate Array* en anglais ou *Matrice de Portes Programmable sur le Terrain* en français) ou un ASIC (*Application-Specific Integrated Circuit* en anglais ou *Circuit Intégré Spécifique à une Application* en français).

La **Fig. 3** représente un exemple d'architecture d'un serveur selon la présente invention.

Le serveur 30 comprend :
- un processeur, micro-processeur, ou microcontrôleur 300 ;
- une mémoire volatile 303 ;
- une mémoire non volatile 302;
- une interface réseau 305 ;
- un bus de communication reliant le processeur 300 à la mémoire ROM 303, à la mémoire RAM 303 et à l'interface réseau 305.

Le processeur 300 est capable d'exécuter des instructions chargées dans la mémoire volatile 303 à partir de la mémoire non volatile 302. Lorsque le serveur 30 est mis sous tension, le processeur 300 est capable de lire de la mémoire volatile 303 des instructions et de les exécuter. Ces instructions forment un programme d'ordinateur qui cause la mise en œuvre, par le processeur 300, de tout ou partie du procédé selon la présente invention.

Tout ou partie du procédé selon la présente invention peut être implémenté sous forme logicielle par exécution d'un ensemble d'instructions par une machine programmable, telle qu'un DSP (*Digital Signal Processor* en anglais ou *Unité de Traitement de Signal Numérique* en français) ou un microcontrôleur ou être implémenté sous forme matérielle par une machine ou un composant dédié, tel qu'un FPGA (*Field-Programmable Gate Array* en anglais ou *Matrice de Portes Programmable sur le Terrain* en français) ou un ASIC (*Application-Specific Integrated Circuit* en anglais ou *Circuit Intégré Spécifique à une Application* en français).

La **Fig. 4** représente des étapes d'un algorithme en partie exécutées par un dispositif mobile sol.

A l'étape E400, l'opérateur de maintenance connecte le dispositif mobile bord EMB 40 à la zone sensible OMS via le serveur de réseau NSS qui donne ainsi entre autres accès à l'interface homme machine IHM de l'aéronef.

A l'étape E401, l'opérateur de maintenance se place au niveau du dispositif à maintenir TA et connecte le dispositif mobile sol EMS 20 au poste utilisateur PU.

A l'étape E402, l'opérateur de maintenance s'authentifie auprès du dispositif mobile sol EMS 20. L'authentification est par exemple effectuée à l'aide d'un code ou de la saisie de l'empreinte digitale de l'opérateur de maintenance. Cette opération effectuée, le dispositif mobile sol EMS 20 établit un tunnel avec le dispositif mobile bord EMB 40 par l'intermédiaire du réseau RE. Le dispositif mobile sol EMS 20 peut ainsi obtenir une représentation de l'interface homme machine IHM de l'aéronef.

A l'étape E403, l'opérateur de maintenance sélectionne avec le poste utilisateur PU, le type de l'aéronef à maintenir et/ou le type de dispositif à maintenir.

A l'étape suivante E404, la documentation technique de l'aéronef est obtenue par le dispositif mobile sol EMS 20 et transférée au poste utilisateur PU.

La documentation technique de l'aéronef peut être obtenue selon deux sources: du serveur du réseau NSS par l'intermédiaire du tunnel et du dispositif mobile bord EMB ou, selon la présente invention du serveur 30. Le dispositif mobile sol EMS 20 effectue alors une requête au serveur 30 via le réseau RE pour obtenir celle-ci et reçoit celle-ci en réponse.

A l'étape E404, l'opérateur de maintenance sélectionne, si besoin, le ou les rapports à télécharger. Ces rapports sont par exemple des rapports comprenant des données mémorisées pendant le vol de l'aéronef. Les informations représentatives de la sélection sont récupérées par le dispositif mobile sol EMS 20 qui effectue des requêtes en conséquence au dispositif mobile bord EMB 40 par l'intermédiaire du tunnel précédemment créé.

A l'étape E405, les rapports correspondant à la sélection sont reçus par le dispositif mobile sol EMS 20.

A l'étape E406, le dispositif mobile sol EMS 20 transfère au poste utilisateur PU les rapports reçus.

A l'étape E407, le dispositif mobile sol EMS 20 obtient du dispositif mobile bord EMB 40 l'interface homme machine IHM de l'aéronef. L'interface homme machine IHM de l'aéronef est transférée par le dispositif mobile bord EMB 40 dans le tunnel créé précédemment.

A l'étape E407, le dispositif mobile sol EMS 20 transfère l'interface homme machine IHM de l'aéronef pour un affichage de celle-ci sur l'écran du poste utilisateur PU. L'opérateur de maintenance peut ainsi effectuer la maintenance du dispositif à maintenir TA et peut effectuer différents réglages à partir des informations fournies par l'interface homme machine de l'aéronef sans avoir besoin de l'assistance d'un tiers dans le cockpit de l'aéronef.

Certaines opérations de maintenance peuvent s'avérer complexes et l'opérateur de maintenance peut parfois avoir besoin de l'assistance d'un expert.

Les opérateurs de maintenance et/ou les compagnies aériennes ont des personnes spécialisées dans des opérations de maintenance données. Ces spécialistes ou experts ne sont pas nécessairement basés sur le lieu de maintenance.

La présente invention offre ainsi la possibilité à l'opérateur de maintenance de contacter un expert pour l'assister dans l'opération de maintenance du dispositif à maintenir.

A l'étape E409, le dispositif mobile sol EMS 20 détecte une requête de contact d'un expert. La requête de contact est effectuée par l'opérateur de maintenance par l'intermédiaire du poste utilisateur et reçue par le dispositif mobile sol EMS 20. A cette étape, le dispositif mobile sol EMS 20 transfère une requête de contact d'un expert au serveur 30.

A l'étape E410, l'interface homme machine de l'aéronef est transférée au serveur 30 pour un affichage de celle-ci à l'expert.

Par exemple, l'interface homme machine est transférée par le dispositif mobile sol pour un affichage de celle-ci à l'expert.

En variante, le serveur 30 établit un tunnel avec le dispositif mobile bord EMB 40 par l'intermédiaire du réseau RE et obtient du dispositif mobile bord EMB 40 l'interface homme machine IHM de l'aéronef. L'interface homme machine IHM de l'aéronef est transférée par le dispositif mobile bord EMB 40 dans le tunnel créé.

L'expert et l'opérateur de maintenance disposent ainsi des informations nécessaires à la maintenance de l'aéronef.

A l'étape E412, l'opérateur de maintenance déconnecte le poste utilisateur PU du dispositif de maintenance sol EMS 20, se rend dans le cockpit de l'aéronef pour déconnecter le dispositif de maintenance bord du serveur de réseau NSS.

## Revendications

1. Procédé de gestion et de maintenance d'un aéronef (10) comportant une zone de haut degré de sécurité, une interface homme machine de l'aéronef étant comprise dans la zone de haut degré de sécurité et nécessaire à une opération de maintenance à effectuer par un opérateur de maintenance sur un dispositif (TA) de l'aéronef à maintenir placé hors de la zone de haut degré de sécurité, le procédé comportant les étapes de :
- connexion d'un premier dispositif (40) à la zone de haute sécurité pour accéder à l'interface homme machine de l'aéronef,
- connexion d'un second dispositif (20) à un troisième dispositif (PU) apte à afficher l'interface homme machine de l'aéronef et par lequel l'opérateur de maintenance peut interagir avec l'interface homme machine de l'aéronef,
- authentification de l'opérateur de maintenance auprès du second dispositif,
- création d'une liaison de communication sécurisée entre le premier et second dispositifs, la liaison sécurisée étant créée dans un réseau de communication,
- réception par le second dispositif de l'interface homme machine de l'aéronef du premier dispositif et transfert d'informations pour l'affichage de l'interface homme machine de l'aéronef sur le troisième dispositif,
- connexion du second dispositif à un serveur (30) par l'intermédiaire du réseau de télécommunication (RE) pour obtenir des informations du serveur à destination du troisième dispositif par l'intermédiaire du second dispositif, la connexion du second dispositif au serveur n'étant pas effectuée par l'intermédiaire de la liaison sécurisée créée.

2. Procédé selon la revendication 1, dans lequel les informations obtenues du serveur sont la documentation de l'aéronef.

3. Procédé selon la revendication 1 ou 2, dans lequel les informations obtenues sont une mise en relation d'un expert avec l'opérateur de maintenance.

4. Procédé selon la revendication 3, dans lequel le second dispositif transfère les informations pour l'affichage de l'interface homme machine de l'aéronef au serveur à destination de l'expert.

5. Procédé selon la revendication 3, où le procédé comporte en outre les étapes de :
- création d'une liaison de communication sécurisée entre le premier dispositif et le serveur, la liaison sécurisée étant créée dans le réseau de communication,
- réception par le serveur de l'interface homme machine de l'aéronef du premier dispositif pour l'affichage de l'interface homme machine de l'aéronef au serveur à destination de l'expert.

6. Système de gestion et de maintenance d'un aéronef (10) comportant une zone de haut degré de sécurité, une interface homme machine de l'aéronef étant comprise dans la zone de haut degré de sécurité et nécessaire à une opération de maintenance à effectuer par un opérateur de maintenance sur un dispositif (TA) de l'aéronef à maintenir placé hors de la zone de haut degré de sécurité, le système comportant :
- des moyens de connexion d'un premier dispositif (40) à la zone de haute sécurité pour accéder à l'interface homme machine de l'aéronef,
- des moyens de connexion d'un second dispositif (20) à un troisième dispositif (PU) apte à afficher l'interface homme machine de l'aéronef et par lequel l'opérateur de maintenance peut interagir avec l'interface homme machine de l'aéronef,
- des moyens d'authentification de l'opérateur de maintenance auprès du second dispositif,
- des moyens de création d'une liaison de communication sécurisée entre le premier et second dispositifs, la liaison sécurisée étant créée dans un réseau de communication,
- des moyens de réception par le second dispositif de l'interface homme machine de l'aéronef du premier dispositif et transfert d'informations pour l'affichage de l'interface homme machine de l'aéronef sur le troisième dispositif,
- des moyens de connexion du second dispositif à un serveur (30) par l'intermédiaire du réseau de télécommunication (RE) pour obtenir des informations du serveur à destination du troisième dispositif par l'intermédiaire du second dispositif, la connexion du second dispositif au serveur n'étant pas effectuée par l'intermédiaire de la liaison sécurisée créée.

## Patentansprüche

1. Verfahren zur Verwaltung und Wartung eines Luftfahrzeugs (10), das einen Bereich mit hohem Sicherheitsgrad enthält, wobei eine Mensch-Maschine-Schnittstelle des Luftfahrzeugs in dem Bereich mit hohem Sicherheitsgrad enthalten und für einen Wartungsvorgang notwendig ist, der von einem Wartungsmitarbeiter an einer zu wartenden Vorrichtung (TA) des Luftfahrzeugs auszuführen ist, die sich außerhalb des Bereichs mit hohem Sicherheitsgrad befindet, wobei das Verfahren die folgenden Schritte aufweist:
- Verbindung einer ersten Vorrichtung (40) mit dem Hochsicherheitsbereich, um zur Mensch-Maschine-Schnittstelle des Luftfahrzeugs zu gelangen,
- Verbindung einer zweiten Vorrichtung (20) mit einer dritten Vorrichtung (PU), die die Mensch-Maschine-Schnittstelle des Luftfahrzeugs anzeigen kann und über die der Wartungsmitarbeiter mit der Mensch-Maschine-Schnittstelle des Luftfahrzeugs interagieren kann,
- Authentifizierung des Wartungsmitarbeiters bei der zweiten Vorrichtung,
- Erzeugung einer gesicherten Kommunikationsverbindung zwischen der ersten und der zweiten Vorrichtung, wobei die gesicherte Verbindung in einem Kommunikationsnetzwerk erzeugt wird,
- Empfang durch die zweite Vorrichtung der Mensch-Maschine-Schnittstelle des Luftfahrzeugs von der ersten Vorrichtung und Übertragung von Informationen zur Anzeige der Mensch-Maschine-Schnittstelle des Luftfahrzeugs auf die dritte Vorrichtung,
- Verbindung der zweiten Vorrichtung mit einem Server (30) über das Telekommunikationsnetzwerk (RE), um Informationen vom Server für die dritte Vorrichtung über die zweite Vorrichtung zu erhalten, wobei die Verbindung der zweiten Vorrichtung mit dem Server nicht über die erzeugte gesicherte Verbindung ausgeführt wird.

2. Verfahren nach Anspruch 1, wobei die vom Server erhaltenen Informationen die Dokumentation des Luftfahrzeugs sind.

3. Verfahren nach Anspruch 1 oder 2, wobei die erhaltenen Informationen eine Verbindung eines Experten mit dem Wartungsmitarbeiter sind.

4. Verfahren nach Anspruch 3, wobei die zweite Vorrichtung die Informationen zur Anzeige der Mensch-Maschine-Schnittstelle des Luftfahrzeugs an den Server für den Experten überträgt.

5. Verfahren nach Anspruch 3, wobei das Verfahren außerdem die folgenden Schritte aufweist:
- Erzeugung einer gesicherten Kommunikationsverbindung zwischen der ersten Vorrichtung und dem Server, wobei die gesicherte Verbindung im Kommunikationsnetzwerk erzeugt wird,
- Empfang durch den Server der Mensch-Maschine-Schnittstelle des Luftfahrzeugs von der ersten Vorrichtung zur Anzeige der Mensch-Maschine-Schnittstelle des Luftfahrzeugs an den Server für den Experten.

6. Verwaltungs- und Wartungssystem eines Luftfahrzeugs (10), das einen Bereich mit hohem Sicherheitsgrad aufweist, wobei eine Mensch-Maschine-Schnittstelle des Luftfahrzeugs im Bereich mit hohem Sicherheitsgrad enthalten und für einen Wartungsvorgang notwendig ist, der von einem Wartungsmitarbeiter an einer zu wartenden Vorrichtung (TA) des Luftfahrzeugs auszuführen ist, die sich außerhalb des Bereichs mit hohem Sicherheitsgrad befindet, wobei das System aufweist:
- Einrichtungen zur Verbindung einer ersten Vorrichtung (40) mit dem Hochsicherheitsbereich, um zur Mensch-Maschine-Schnittstelle des Luftfahrzeugs zu gelangen,
- Einrichtungen zur Verbindung einer zweiten Vorrichtung (20) mit einer dritten Vorrichtung (PU), die die Mensch-Maschine-Schnittstelle des Luftfahrzeugs anzeigen kann und über die der Wartungsmitarbeiter mit der Mensch-Maschine-Schnittstelle des Luftfahrzeugs interagieren kann,
- Einrichtungen zur Authentifizierung des Wartungsmitarbeiters bei der zweiten Vorrichtung,
- Einrichtungen zur Erzeugung einer gesicherten Kommunikationsverbindung zwischen der ersten und der zweiten Vorrichtung, wobei die gesicherte Verbindung in einem Kommunikationsnetzwerk erzeugt wird,
- Einrichtungen zum Empfang durch die zweite Vorrichtung der Mensch-Maschine-Schnittstelle des Luftfahrzeugs von der ersten Vorrichtung und Übertragung von Informationen zur Anzeige der Mensch-Maschine-Schnittstelle des Luftfahrzeugs auf die dritte Vorrichtung,
- Einrichtungen zur Verbindung der zweiten Vorrichtung mit einem Server (30) über das Telekommunikationsnetzwerk (RE), um Informationen vom Server für die dritte Vorrichtung mittels der zweiten Vorrichtung zu erhalten, wobei die Verbindung der zweiten Vorrichtung mit dem Server nicht über die erzeugte gesicherte Verbindung ausgeführt wird.

## Claims

1. Method for managing and maintaining an aircraft (10) comprising a zone with a high degree of security, a human-machine interface of the aircraft being included in the zone with a high degree of security and required for a maintenance operation to be carried out by a maintenance operator on a device (TA) of the aircraft to be maintained placed outside the zone with a high degree of security, the method comprising the steps of:
- connecting a first device (40) to the high-security zone in order to access the human-machine interface of the aircraft,
- connecting a second device (20) to a third device (PU) capable of displaying the human-machine interface of the aircraft and through which the maintenance operator can interact with the human-machine interface of the aircraft,
- authenticating the maintenance operator with the second device,
- creating a secure communication link between the first and second devices, the secure link being created in a communication network,
- receiving, by the second device, the human-machine interface of the aircraft from the first device and transferring information for displaying the human-machine interface of the aircraft on the third device,
- connecting the second device to a server (30) via the telecommunication network (RE) in order to obtain information from the server destined for the third device via the second device, the connection of the second device to the server not being performed via the secure link created.

2. Method according to Claim 1, wherein the information obtained from the server is the documentation of the aircraft.

3. Method according to Claim 1 or 2, wherein the information obtained is a connection of an expert to the maintenance operator.

4. Method according to Claim 3, wherein the second device transfers the information for displaying the human-machine interface of the aircraft to the server destined for the expert.

5. Method according to Claim 3, where the method further comprises the steps of:
- creating a secure communication link between the first device and the server, the secure link being created in the communication network,
- receiving, by the server, the human-machine interface of the aircraft from the first device for displaying the human-machine interface of the aircraft to the server destined for the expert.

6. System for managing and maintaining an aircraft (10) comprising a zone with a high degree of security, a human-machine interface of the aircraft being included in the zone with a high degree of security and required for a maintenance operation to be carried out by a maintenance operator on a device (TA) of the aircraft to be maintained placed outside the zone with a high degree of security, the system comprising:
- means for connecting a first device (40) to the high-security zone in order to access the human-machine interface of the aircraft,
- means for connecting a second device (20) to a third device (PU) capable of displaying the human-machine interface of the aircraft and through which the maintenance operator can interact with the human-machine interface of the aircraft,
- means for authenticating the maintenance operator with the second device,
- means for creating a secure communication link between the first and second devices, the secure link being created in a communication network,
- means for receiving, by the second device, the human-machine interface of the aircraft from the first device and transferring information for displaying the human-machine interface of the aircraft on the third device,
- means for connecting the second device to a server (30) via the telecommunication network (RE) in order to obtain information from the server destined for the third device via the second device, the connection of the second device to the server not being performed via the secure link created.
